Europäisches Patentamt

European Patent Office

Office européen des brevets

(19)

(11) Numéro de publication: **0 028 967**
**B1**

(12) # FASCICULE DE BREVET EUROPEEN

(45) Date de publication du fascicule du brevet:
**30.05.84**

(21) Numéro de dépôt: **80401544.4**

(22) Date de dépôt: **30.10.80**

(51) Int. Cl.³: **C 08 J 9/42,** C 08 J 9/38,
**B 29 D 27/00, H 01 Q 17/00**

(54) **Procédé de fabrication de matière absorbant les ondes hyperfréquences et matière absorbante ainsi constituée.**

(30) Priorité: **09.11.79 FR 7927709**

(43) Date de publication de la demande:
**20.05.81 Bulletin 81/20**

(45) Mention de la délivrance du brevet:
**30.05.84 Bulletin 84/22**

(84) Etats contractants désignés:
**DE GB IT NL**

(56) Documents cités:
**FR - A - 1 468 854**
**FR - A - 2 147 839**
**FR - A - 2 156 856**
**US - A - 3 329 585**
**US - A - 4 046 939**

**CHEMICAL ABSTRACTS, vol. 83, no. 24, 14 juin 1976, abrégé no. 207274b, page 55, Columbus, Ohio, US SIEMENS ZEITSCHRIFT, vol.40, no. 4, avril 1966, Siemens & Halske AG, Berlin, Munich, DE, P. OLSZEWSKI: "Mikrowellenabsorber", pages 326-328**

(73) Titulaire: **THOMSON-CSF, 173, Boulevard Haussmann, F-75379 Paris Cedex 08 (FR)**

(72) Inventeur: **Rannou, Jean,**
**"THOMSON-CSF" SCPI 173, Bld Haussmann,**
**F-75360 Paris Cedex 08 (FR)**
Inventeur: **Grozellier, Michel,**
**"THOMSON-CSF" SCPI 173, Bld Haussmann,**
**F-75360 Paris Cedex 08 (FR)**
Inventeur: **Godet, Marcel,**
**"THOMSON-CSF" SCPI 173, Bld, Haussmann,**
**F-75360 Paris Cedex 08 (FR)**

(74) Mandataire: **Benoit, Monique et al, THOMSON-CSF SCPI 173, Bld Haussmann, F-75379 Paris Cedex 08 (FR)**

## Description

Dans de nombreux domaines techniques relevant des hyperfréquences comme par exemple les équipements de détection il est nécessaire de disposer de matériaux absorbant les ondes hyperfréquences afin d'éviter par exemple des couplages parasites entre les antennes d'émission et de réception quand celles-ci sont séparées. Ces matériaux ont également un rôle décisif dans l'étude et la mise au point des antennes radar et plus généralement de télécommunication dans des chambres spéciales appelées «chambres sourdes». Les parois de ces chambres sont revêtues complètement de matière absorbant les ondes hyperfréquences afin que, seule, l'onde incidente directe soit reçue par l'antenne étudiée.

Les matières absorbantes connues par l'art antérieur peuvent se répartir en deux grandes catégories:
- les matières absorbantes à faible coefficient de réflexion et à moyenne atténuation qui se présentent en général sous la forme d'une matière alvéolaire à alvéoles communicants, ou de mousse.
- les matières absorbantes à grande atténuation et dont le coefficient de réflexion n'est pas négligeable et qui sont elles, sous forme de blocs rigides.

Le premier type de matière absorbante est généralement obtenu à partir d'une matière poreuse ou d'une mousse, dont les alvéoles communiquent les uns avec les autres. Par trempages successifs de cette matière dans une suspension de carbone en poudre très fine, et par séchage, on obtient une matière absorbante répondant aux propriétés de la première catégorie.

Cette matière absorbante présente toutefois des inconvénients pouvant être gênants:
- tenue en température n'excédant pas 100° C;
- forte reprise d'humidité du fait des alvéoles communicants, d'où une désadaptation de la matière absorbante par forte augmentation de la constante diélectrique.
- difficultés d'un usinage de précision particulièrement nécessaire pour les pièces proches des antennes.

Les matières absorbantes relevant de la seconde catégorie sont généralement d'une densité élevée limitant ainsi encore plus fortement leur utilisation, spécialement dans les dispositifs aéroportés.

La présente invention vise à définir un nouveau procédé de fabrication d'une matière absorbante de la première catégorie, elle vise également la matière absorbante ainsi réalisée qui remédie aux inconvénients qui ont été énoncés pour la matière absorbante relevant de cette catégorie.

Selon une caractéristique de l'invention le procédé de fabrication d'une matière à alvéoles fermés absorbant les ondes hyperfréquence et constituée d'un matériau poreux dont les alvéoles sont imprégnés d'une composition comprenant des particules de carbone en suspension est caractérisé en ce qu'il consiste à:

- choisir un matériau rigide à alvéoles fermées;
- l'immerger dans un fluide qui contient des particules de carbone en suspension et dans lequel un liant polymérisable est dissous;
- lui appliquer, par l'intermédiaire du fluide, une pression suffisante pour fissurer les parois alvéolaires et provoquer la diffusion dans les alvéoles par les fissures, du fluide contenant la suspension de carbone et le liant;
- sortir le matériau ainsi imprégné;
- l'étuver à une température provoquant du seul fluide; et
- polymériser le liant.

D'autres avantages et caractéristiques du procédé selon l'invention ressortiront de la description qui suit, illustrée par les figures qui représentent:
- la figure 1, le schéma d'un exemple de dispositif permettant la mise en oevre du procédé selon l'invention,
- la figure 2, un schéma en coupe montrant la structure alvéolaire du produit poreux utilisé,
- la figure 3, un schéma en coupe montrant la mise en communication des alvéoles sous l'effet de la pression appliquée,
- la figure 4, un schéma en coupe montrant la structure des alvéoles après séchage.

Comme il a été dit dans le procédé selon l'invention, le corps à alvéoles fermés est immergé dans un fluide possédant du carbone en suspension et un liant polymérisable en solution.
- les alvéoles sont mis en communication par application d'une pression de manière à faire diffuser le fluide, le carbone et le liant dans les alvéoles;
- le corps poreux ainsi imprégné est étuvé de façon à éliminer le fluide et le liant est polymérisé. La suspension de carbone doit donc pénétrer dans un corps poreux á alvéoles fermés.

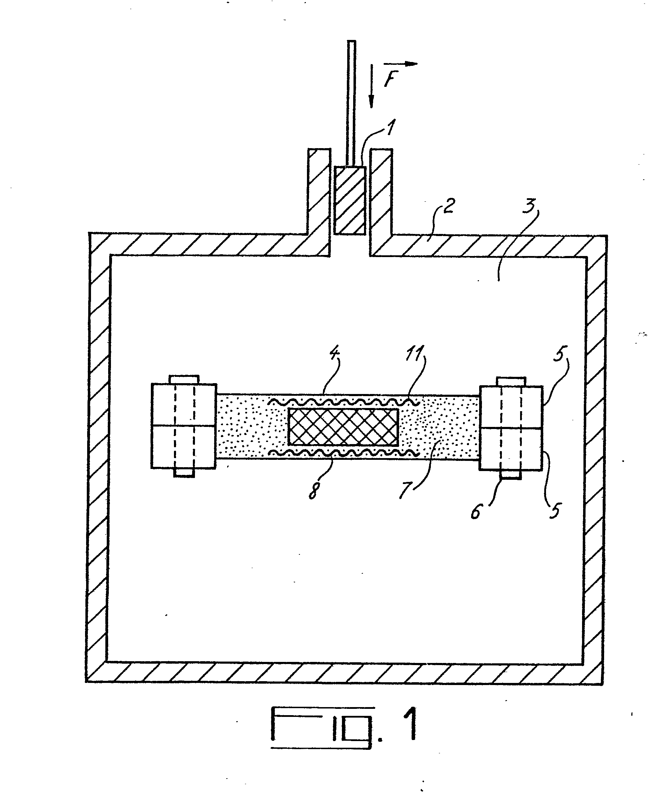

La figure 1 montre un exemple d'un dispositif permettant la mise en oeuvre de cette première étape du procédé. Il comporte une cuve 2 totalement remplie d'un liquide ou d'un gaz 3, qui de façon préférentielle mais non limitative est un liquide et plus particulièrement de l'eau, un orifice dans lequel est disposé un piston 1 permettant d'obtenir la pression désirée dans la cuve 2. A l'intérieur de cette cuve 2 de manière solidaire ou non est disposée une enceinte 5 fermée hermétiquement contenant le corps poreux 8 et la suspension de carbone 7. Le volume intérieur de cette enceinte 5 est égale à la somme des volumes du corps poreux 8 et de la suspension de carbone 7. Dans une réalisation préférentielle mais non limitative, l'enceinte comporte deux parties métalliques 5 fixées l'une à l'autre de façon hermétique par des moyens de fixation 6, comme par exemple des écrous; au moins une paroi souple et imperméable 4 est alors aménagée dans l'enceinte 5. Ces parois peuvent être par exemple constituées d'une matière du type plastique. Des grilles 11 sont disposées entre le corps poreux 8 et les parois souples 4 de parois souples 4 de façon à éviter, lors de pression élevée, de boucher les alvéoles du corps poreux avec les parois souples 4, ce qui interdirait la diffusion de la suspension de carbone dans les alvéoles. Dans une version simplifiée du dispositif de la figure 1 l'enceinte 5 peut être un simple sac de matière souple et imperméable fermé hermétiquement.

La suspension de carbone est de façon préférentielle aqueuse et contient un produit liant soluble dans le fluide de la suspension de carbone et pouvant se polymériser dans des conditions physiques et/ou chimiques précises comme par exemple un simple étuvage. On pourra notamment utiliser une solution colloïdale de carbone ou même une simple émulsion.

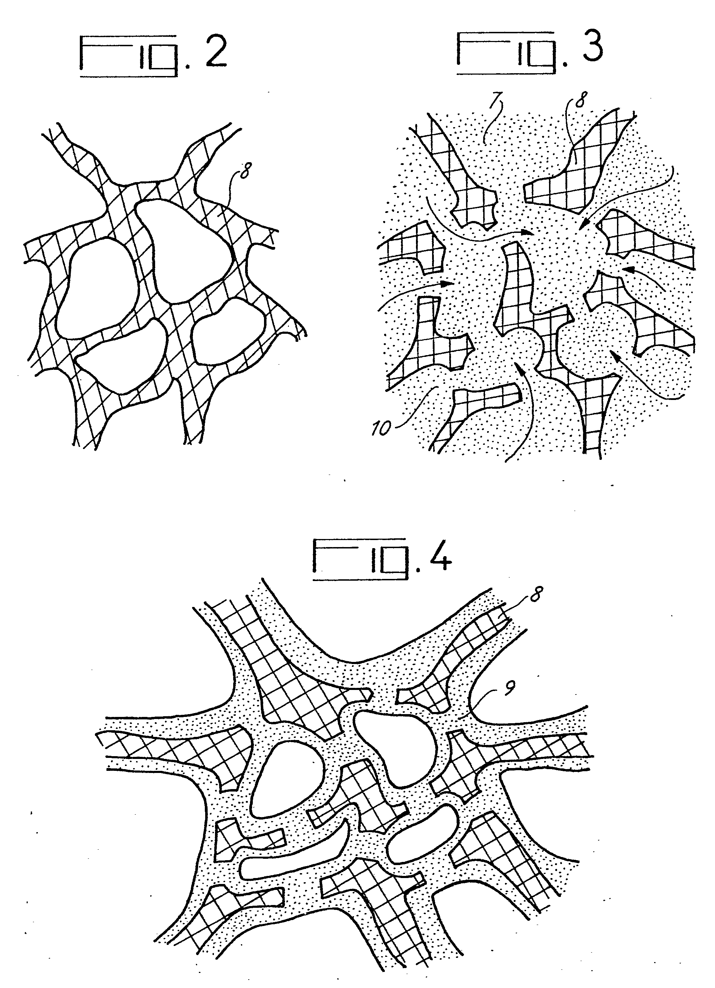

La figure 2 montre un schéma en coupe du corps poreux 8 utilisé. La seule contrainte qui est imposée est d'être à alvéoles fermés. Selon un mode préférentiel de réalisation ce corps poreux est du polyuréthane expansé.

La figure 3 montre une coupe du corps poreux 8 lorsque la suspension de carbone 7 avec le liant 9 est soumise à la pression du liquide 3 dans la cuve 2 par l'intermédiaire des parois souples 4. Lorsque cette pression dépasse un seuil pouvant se situer par exemple autour de 50 bars, les points de moindre résistance 10 des parois alvéolaires cèdent, permettant la diffusion de la suspension de carbone 7.

Dans une seconde étape, le corps poreux 8 ainsi traité est sortie de la cuve à pression 2, et est séché à une températeure supérieure à 100° C. La figure 4 montre un schéma illustrant en coupe le corps obtenu en fin de séchage. Le liant 9 est alors polymérisé, soit par l'action de la chaleur, soit par l'action de la chaleur, soit par l'évaporation de l'eau dans le cas d'un corps à effet de polycondensation comme par exemple des résines acryliques autoréticulantes, soit par tout autre processus physique et/ou chimique. Les orifices entre alvéoles, étant de faible taille, ils se trouvent ainsi bouchés permettant d'éviter une reprise de l'humidité. Le carbone, à la fin de. la polymérisation du liant est pour une part mélangé au liant et pour une autre part prisonnier des alvéoles refermés.

En modifiant ainsi la concentration de carbone de la suspension 7 et la pression, on peut obtenir une matière absorbante pour les ondes hyperfréquences plus ou moins efficace. La superposition de plusieurs couches d'une telle matière avec des concentrations progressives de carbone permet de constituer un véritable traitement anti-reflet pour ces ondes hyperfréquences.

Une telle matière présente en outre l'avantage d'une tenue en température voisine de 200° C et une reprise en humidité équivalente à celle d'origine du corps poreux seul. Son poids spécifique est en outre peu différent de celui de la matière poreuse d'origine.

Une couche de vernis ou de tout autre matière imperméable peut éventuellement être disposée sur les surfaces de la matière absorbante ainsi réalisée de façon à en augmenter l'étanchéité.

Dans le dispositif utilisé pour la réalisation de cette matière absorbante, la pression peut être directement appliquée à l'intérieur de l'enceinte 5 contenant la suspension de carbone 7 et le corps poreux 8; dans ce cas les parois de cette enceinte 5 sont toutes rigides.

On a ainsi décrit un procédé de fabrication d'une matière absorbante pour les ondes hyperfréquence et la matière absorbante obtenue.

### Revendications

1. Procédé de fabrication d'une matière absorbant les ondes hyperfréquence et constituée d'un matériau poreux dont les alvéoles sont imprégnés d'une composition comprenant des particules de carbone en suspension, caractérisé en ce qu'il consiste à:
- choisir un matériau rigide à alvéoles fermés;
- l'immerger dans un fluide qui contient des particules de carbone en suspension et dans lequel un liant polymérisable est dissous;
- lui appliquer, par l'intermédiaire de ce fluide, une pression suffisante pour fissurer les parois alvéolaires et provoquer la diffusion dans les alvéoles, par les fissures, du fluide contenant le carbone et le liant;
- sortir du fluide le matériau ainsi imprégné;
- l'étuver à une température provoquant l'évaporation du seul fluide; et
- polymériser le liant.

2. Procédé de fabrication d'une matière absorbante selon la revendication 1, caractérisé en ce que la matière poreuse utilisée est du polyuréthane expansé.

3. Procédé de fabrication d'une matière absorbante selon la revendication 1, caractérisé en ce que le fluide contenant la suspension de carbone et le liant est de l'eau.

4. Procédé de fabrication d'une matière absorbante selon la revendication 1, caractérisé en ce que le liant est un produit permettant une polycondensation.

5. Procédé de fabrication d'une matière absorbante selon la revendication 1 ou 4, caractérisé en ce que le liant est une résine acrylique autoréticulante.

6. Matière absorbant les ondes hyperfréquence, caractérisée en ce qu'elle est fabriquée par un procédé selon l'une quelconque des revendications 1 à 5.

### Claims

1. Manufacturing process for a material absorbing hyperfrequency waves and constituted by a porous material the alveoles of which are impregnated with a composition comprising carbon particles in suspension, characterized in that it consists in:
- selecting a rigid material having sealed alveoles;
- immersing it in a fluid containing carbon particles in suspension and in which a polymerizable binder is dissolved;
- applying to it, through the intermediary of this fluid a pressure sufficient to fissure the alveolar walls and to provoke the diffusion in the alveoles, through the fissures, of the fluid containing the carbon and the binder;
- removing from the fluid the thus impregnated material;
- drying it at a temperature provoking the evaporation of the single fluide;
- polymerizing the binder.

2. Manufacturing process for an absorbing material according to claim 1, characterized in that the porous material used is expanded polyurethane.

3. Manufacturing process for an absorbing material according to claim 1, characterized in that the liquid containing the carbon in suspension and the binder is water.

4. Manufacturing process for an absorbing material according to claim 1, characterized in that the binder is a product allowing a polycondensation.

5. Manufacturing process for an absorbing material according to claim 1 or 4, characterized in that the binder is an autoreticulent acrylic resin.

6. Material absorbing hyperfrequency waves, characterized in that it is manufactured by a process according to any one of claims 1 to 5.

**Patentansprüche**

1. Herstellungsverfahren eines die Hyperfrequenzwellen absorbierenden Stoffs, der aus einem porösen Material besteht, dessen Zellen mit einem Kohlenstoffteilchen in Suspensionsform enthaltendem Gemisch imprägniert sind, dadurch gekennzeichnet, dass er darin besteht:

- ein starres Material mit geschlossenen Zellen auszuwählen;
- es in ein Fluid eintauchen, das Kohlenstoffteilchen in Suspensionsform enthält und in dem ein polymerisierbares Bindemittel gelöst ist;
- mit Hilfe dieses Fluids einen Druck auf es ausüben, der ausreicht, um die zellartigen Wände zu zerklüften und über die Zerklüftungen die Diffusion des den Kohlenstoff und das Bindemittel enthaltenden Fluids zu ermöglichen;
- das auf diese Weise imprägnierte Material ·aus dem Fluid herausnehmen;
- es bei einer nur die Verdunstung des Fluids bewirkenden Temperatur trocknen;
- das Bindemittel polymerisieren.

2. Herstellungsverfahren eines absorbierenden Materials nach Anspruch 1, dadurch gekennzeichnet, dass der verwendete poröse Stoff expandiertes Polyurethane ist.

3. Herstellungsverfahren eines absorbierenden Materials nach Anspruch 1, dadurch gekennzeichnet, dass das die Kohlenstoffsuspension und das Bindemittel enthaltende Fluid Wasser ist.

4. Herstellungsverfahren eines absorbierenden Materials nach Anspruch 1, dadurch gekennzeichnet, dass das Bindemittel ein eine Polykondensation ermöglichendes Produkt ist.

5. Herstellungsverfahren eines absorbierenden Materials nach Anspruch 1, dadurch gekennzeichnet, dass das Bindemittel ein selbstvernetzendes Akrylharz ist.

6. Hyperfrequenzwellen absorbierender Stoff, dadurch gekennzeichnet, dass er nach einem Verfahren nach einem der Ansprüche 1 bis 5 hergestellt ist.

Fig. 1

# Fig. 2

# Fig. 3

# Fig. 4